# EUROPÄISCHE PATENTSCHRIFT

(11) **EP 0 596 906 B1**
(45) Veröffentlichungstag und Bekanntmachung des Hinweises auf die Patenterteilung: **04.03.1998**
(21) Anmeldenummer: 92914588.6
(22) Anmeldetag: 11.07.1992
(51) Int. Cl.: B65D 83/00, B65D 3/22, B31C 3/00

(54) **HÜLSENFÖRMIGER VERPACKUNGSBEHÄLTER AUS MEHRSCHICHTMATERIAL SOWIE VERFAHREN UND VORRICHTUNG ZUM HERSTELLEN EINES DERARTIGEN VERPACKUNGSBEHÄLTERS**
SLEEVE-SHAPED PACKING CONTAINER MADE OF MULTI-LAYERED MATERIAL AND PROCESS AND DEVICE FOR MAKING IT
RECIPIENT D'EMBALLAGE EN FORME DE DOUILLE EN MATERIAU MULTICOUCHE, AINSI QUE PROCEDE ET DISPOSITIF POUR LA FABRICATION D'UN TEL RECIPIENT D'EMBALLAGE

(30) Priorität: 17.07.1991 DE 4123743
(43) Veröffentlichungstag der Anmeldung: 18.05.1994
(73) Patentinhaber: KIRCHBERG, Karl, 48161 Münster (DE)
(72) Erfinder: KIRCHBERG, Karl, D-4010 Hilden/Rhld. (DE); FORSTMANN, Frank, D-4000 Düsseldorf 31 (DE)
(74) Vertreter: Schumacher, Horst, Dr. Dipl.-Phys.
(86) Internationale Anmeldenummer: EP9201570
(87) Internationale Veröffentlichungsnummer: WO9301994

(56) Entgegenhaltungen:
- EP-A- 0 113 160
- DE-B- 1 134 271
- FR-A- 2 218 192
- GB-A- 491 904
- US-A- 4 299 329

## Beschreibung

Die Erfindung betrifft einen hülsenförmigen Verpackungsbehälter aus Mehrschichtmaterial mit den Merkmalen des Patentanspruchs 1, ein Verfahren zum Herstellen eines derartigen hülsenförmigen Verpackungsbehälters mit den Merkmalen des Patentanspruchs 12 sowie Vorrichtungen zum Herstellen eines hülsenförmigen Verpackungsbehälters gemäß Patentansprüchen 18, 19 und 20.

Verpackungsbehälter aus Mehrschichtmaterial haben unter anderem den Nachteil - wenn überhaupt - dann nur mit hohem Aufwand recyclebar zu sein. Ein typischer Mehrschichtaufbau besteht aus einem auf der Innenseite mit einer Folie aus Kunststoff oder Aluminium oder einem Mehrschichtwerkstoff vollflächig kaschierten Kartonagenmaterial, das auf der Außenseite ebenfalls mit einer dünnen Schicht, aus bedrucktem Papier, Kunststoffolie oder dergleichen vollflächig kaschiert sein kann. Wegen der Recyclingprobleme derartiger Mehrschichtmaterialien werden aus Vollkunststoff bestehende Verpackungsbehälter trotz der auch für Kunststoffe bekannter Recyclingprobleme und -kosten bevorzugt, weil reines Kartonagenmaterial für die überwiegende Zahl von Verpackungsgütern - ob nun im Lebensmittelbereich oder im Bereich chemischer Produkte, insbesondere in flüssiger oder halbflüssiger Konsistent - ungeeignet sind.

In der FR-A-2 218 192 ist ein Verpackungsbehälter aus Mehrschichtmaterial beschrieben, bei welchem zwei eine Schicht aus Aluminum umfassende Lagen miteinander wärmeverschweißt sind, um einen wasserundurchlässigen Verpackungsbehälter bereitzustellen. Oder es ist eine Schicht aus Papier mit einer Schicht aus Aluminium durch eine thermoplastische Zwischen schicht dauerhaft verbunden. In beiden Fällen ist die Verbindung praktisch untrennbar.

Desweiteren weist dieser Verpackungsbehälter drei äußere Lagen auf, die in "gebräuchlicher Weise" um die wasserdichten Innenlagen angeordnet sind. Ein dem Stand der Technik gemäßes Anordnen von Lagen bei hülsenförmigen Verpackungsbehältern beinhaltet regelmäßig ein Verkleben dieser Lagen untereinander.

Die EP-A-0 113 160 beschreibt einen hülsenförmigen Verpakkungsbehälter, bei welchem eine innere Schutzschicht von einer weiteren Schicht überzogen ist, um die Schutzschicht zu stabilisieten und die Befestigung eines Dekkels zu ermöglichen. Desweiteren ist in der EP-A-0 113 160 ein Deckel offenbart, der auf zumindestens eine Öffnung des Verpackungsbehälters gesteckt wird. Es wird u.a. ein Ausführungsbeispiel beschrieben, bei welchem der Deckel sowohl mit der Außenseite als auch mit der Innenseite der Verpackungsbehälterhülse fest verbunden ist. Mithin wird in dieser Druckschrift nur die feste Verbindung eines Deckels mit einer insich festverbundenen Hülse eines Verpackungsbehälters offenbart.

Davon ausgehend liegt der Erfindung die **Aufgabe** zugrunde, einen hülsenförmigen Verpackungsbehälter aus Mehrschichtmaterial zu schaffen, der auf einfache Weise recyclebar ist. Weiter wird angestrebt, daß beim Entfernen der Innenhülse keine Gefahr der Kontaminierung der verbleibenden Außenhülse besteht.
Zur Lösung dieser Aufgabe wird ein hülsenförmiger Verpakkungsbehälter mit den Merkmalen des Patentanspruchs 1, ein Herstellungsverfahren mit den Merkmalen des Patentanspruchs 12, sowie Herstellungsvorrichtungen mit den Merkmalen der Ansprüche 18, 19 und 20 vorgeschlagen.
Die erfindungsgemäßen hülsenförmigen Verpackungsbehälter haben gegenüber dem aus der FR-A-2 218 192 bekannten Stand der Technik unter anderem den Vorteil, daß ihre innere Folienhülse vollständig von der äußeren Traghülse trennbar ist, so daß sie vom Endverbraucher problemlos in recyclingfähige Einzelbestandteile aufteilbar sind. Aufgrund der unterschiedlichen Verformbarkeiteigenschaften dieser beiden Hülsen wird die kraftschlüssige Verbindung durch radiales Verformen zerstört, wobei die Teile trennbar sind.
"Hülsenförmige" Verpackungsbehälter sind im Sinne der Erfindung sämtliche Verpackungsbehälter, die aus einer mehr oder minder eigensteifen, entlang ihrer gesamten Länge gleichmäßig aus mindestens einer innenliegenden folienartigen Schutzschicht und einer bezüglich der Schutzschicht außenliegenden Trageschicht aufgebauten Hülse (Hülsenkörper bestehen, die mindestens an einem, vorzugsweise an beiden Enden mit einem Mündungsverschluß versehbar sind und die als fertige Hülse erst befüllt wird. Es ist gebräuchlich, die Schutzschicht und die Tragschicht als "Lagen" zu bezeichnen; vor allem die Tragschicht ist in der Regel mehrlagig. Sie unterscheidet sich damit von den - nicht gattungsgemäßenSchlauchfolienverpackungen (EP-A2-0 151 922), bei denen ein endseitig geschlossener, bereits befüllter Folienschlauch in eine Papphülse eingeschoben wird. Grundsätzlich kann der erfindungsgemäße Hülsenkörper eine konisch zulaufende Form haben. Besonders vorteilhaft sind jedoch Hülsenkörper mit zylindrischer, das heißt über ihre gesamte Länge einen konstanten Querschnitt aufweisende Hülsenkörper von polygoner und/oder gekrümmter, wie zum Beispiel kreisrunder Außenkontur.

Eine "folienartige Schutzschicht" im Sinne der Erfindung besteht aus einer relativ dünnwandigen, vorzugsweise aus einer Bahnenware hergestellten Schicht aus einem Material, welches das Verpackungsgut vor einem Kontakt mit der Tragschicht und damit - indirekt - auch vor einem Kontakt mit der Außenatmosphäre des Verpackungsnehälters - bzw. umgekehrt - schützt, im weitesten Sinne also eine Trennfunktion bzw. Abdichtfunktion ausübt.

Eine "Tragschicht" im Sinne der Erfindung gibt den Hülsenkörper des hülsenförmigen Verpackungsbehälters eine gewisse Eigensteifigkeit gegenüber Verformungsangriffen von außen oder von innen, wie Verbiegen, Zusammendrücken, innerem Überdruck oder dergleichen.

Nach dem Gebrauch können die erfindungsgemäße Ausßenhülse und die erfindungsgemäße Innenhülse durch Drücken oder Ziehen relativ zueinander verschoben und dadurch in zwei ganze Teile von einander getrennt werden; hierzu kann ein Werkzeug nach Anspruch 16, welches auch zur Behälterentleerung mitbenutzt werden kann, oder ein länglicher Gegenstand, wie ein Hammerstiel, dienen. Bevorzugt wird der leere Hülsenkörper vorher seitlich gequetscht oder gewalkt, wobei sich die Innenhülse großflächig von der außenhülse abhebt. Grundsätzlich ist es aber auch denkbar, daß bei dem Trennvorgang die Außenhülse oder die Innenhülse oder beide zerstört werden und danach also nicht mehr in Hülsenform vorliegen.

Die Trennung (Auseinanderziehen) des Materials der Aussenhülse vom Material der Innenhülse wird - soweit vorhanden- durch eine Handhabe an der Innennülse unterstützt, die unabhängig von der Aussenhülse angepaßt werden kann, ohne die Innennülse vorab in einem Teilbereich, in dem sie von der Außenhülse umschlossen ist, von der Außenhülse lösen zu müssen. Eine derartige Handhabe kann zum Beispiel in einem von der Außenhülse fortweisenden Flächenstück des Materials der Innenhülse bestehen.

Eine wesentliche Vereinfachung des Zerlegens des Mehrschichtmaterials in seine Bestandteile ergibt sich durch die Merkmale des Patentanspruchs 3. Ein demgemäß als Handhabe dienender und allein mit der Innenhülse fest verbundener, mit der Außenhülse also nicht oder leicht lösbar verbundener Mündungsverschluß ist in der Regel nicht nur besonders ergonomisch, sondern gestattet die problemlose Übertragung erheblicher Kräfte, wie sie beim Verschieben zwischen Innenhülse und Außenhülse unter Umständen aufzubringen sind.

Ein stopfenartig in die Innenhülse hineinpassender Mündungsverschluß nach Patentanspruch 4 gestattet eine relativ großflächige Verbindung zwischen Mündungsverschluß und Innenhülse an der Stopfenaußenwand. Derartige Mündungsverschlüsse sind vorzugsweise als Tiefziehteile, insbesondere aus Metall, ausgebildet (Anspruch 5), wobei ein etwa vorgesehener Mündungsstutzen vorzugsweise einstückig mit dem Tiefziehteil und damit aus demselben Material wie das Tiefziehteil hergestellt wird.

Während nun eine Verbindung zwischen dem Mündungsverschluß und der Innenhülse auf die verschiedensten Arten denkbar ist, wird die Verwendung wärmeverschweißbarer Kunststoffe nach Patentanspruch 6 besonders bevorzugt, da dies gleichzeitig eine hohe Dichtigkeit an der Berührungskante zwischen Mündungsverschluß und Innenhülse gewährleistet und besonders einfach verarbeitbar ist, insbesondere mit einer Vorrichtung nach Patentanspruch 15. Ein Übermaß des stopfenartigen Teils des Mündungsverschlusses gemäß Patentanspruch 7 gewährleistet aufgrund der auftretenden Umfangsspannug, daß etwa vorhandene, wärmeverschweißbare Kunststoffe homogen verschweißt werden und dadurch eine völlige Dichtigkeit zwischen Mündungsverschluß und Innenhülse sowie eine besonders gleichmäßige und starke Verbindung zur Übertragung relativ hoher Kräfte von dem Mündungsverschluß auf die Innenhülse erzielt werden.

Für eine Relativverschiebung zwischen der Innen- und Außenhülse hat sich, vor allem für den Anwendungsbereich sogenannter Kartuschen zum Aufbewahren und Abspritzen mehr oder minder zähflüssiger Massen ein Spender, zum Beispiel eine Kartuschenpistole, erwiesen, der mit, insbesondere zangenförmig wirkenden, Greifelementen für die Außenhülse ausgestattet ist. Derartige Vorrichtungen sind für hülsenförmige Verpackungsbehälter nach einem der Patentansprüche 1 bis 7, insbesondere nach einem der Patentansprüche 3 bis 6 verwendbar, insbesondere dann, wenn die Vorrichtung einen die Innenhülse aus der Außenhülse herausschiebenden Kolben aufweist, dessen Kolbenstange unter Umständen aber länger als die üblicher Weise verwendeten Kolbenstangen sein muß.

Die vorgenannten, sowie die beanspruchten und in dem nachfolgenden Ausführungsbeispiel beschriebenen, erfindungsgemäß zu verwendenden Bauteile bzw. Verfahrensschritte unterliegen in ihrer Größe, Formgestaltung, Materialauswahl und technischen Konzeptionen bzw. ihren Verfahrensbedingungen keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus weiteren Unteransprüchen sowie der nachfolgenden Beschreibung der zugehörigen Zeichnung, in der - beispielhaft - ein erfindungsgemäßer hülsenförmiger Verpackungsbehälter und Vorrichtungsbauteile zu seiner Herstellung und Verwendung dargestellt sind. In der Zeichnung zeigen:
Fig. 1 einen erfindungsgemäßen Verpackungsbehälter in Form einer Kartusche zum Aufbewahren und Abspritzen zähflüssiger und ähnlicher Massen mit einer Kartuschenpistole während eines Trennvorgangs - in einer im wesentlichen perspektivisch dargestellten Seitenansicht;
Fig. 2 von einem Verpackungsbehälter nach Fig. 1 einen Axialschnitt zusammen mit einem aufgesetzten Herstellungswerkzeug;
Fig. 3 eine vergrößerte Ausschnittsdarstellung eines Verpackungsbehälters nach Fig. 2;
Fig. 4 von einer Kartuschenpistole nach Fig. 1 eine alternative Ausführungsform der Greifringkörperhälften;
Fig. 5 von einer alternativen Ausführungsform eines Verpackungsbehälters zu Fig. 1 bis 3 das Entleerungsende im Achsialschnitt entsprechend Fig. 2 oder 3;
Fig. 6 eine alternative Vorrichtung zum Herstellen eines Mündungsverschlusses im Achsialschnitt entsprechend Fig. 2;
Fig. 7 eine schematische Darstellung des Herstellungsverfahrens;
Fig. 8 einen vergrößerten Ausschnitt gemäß dem eingekreisten Detail IV in Fig. 3;
Fig. 9 eine weitere Ausführungsform des zylinderförmigen Grundkörpers des Verpackungsbehälters und
Fig. 10 eine Stirnansicht zu Fig. 9.

Der insgesamt mit 100 bezeichnete Verpackungsbehälter besteht aus einem im Querschnitt kreiszylindrischen Hülsenkörper 20 und einem Mündungsverschluß 10. Der Hülsenkörper 20 ist aus einem Mehrschichtmaterial hergestellt und besteht aus einer innerliegenden folienartigen Schutzschicht und einer bezüglich der Schutzschicht außenliegenden Tragschicht.

Die folienartige Schutzschicht besteht in dem dargestellten Ausführungsbeispiel aus einer auf ihrer Innenseite kunststoffbeschichteten Folie aus Aluminium, während die Tragschicht aus Kartonmaterial besteht.

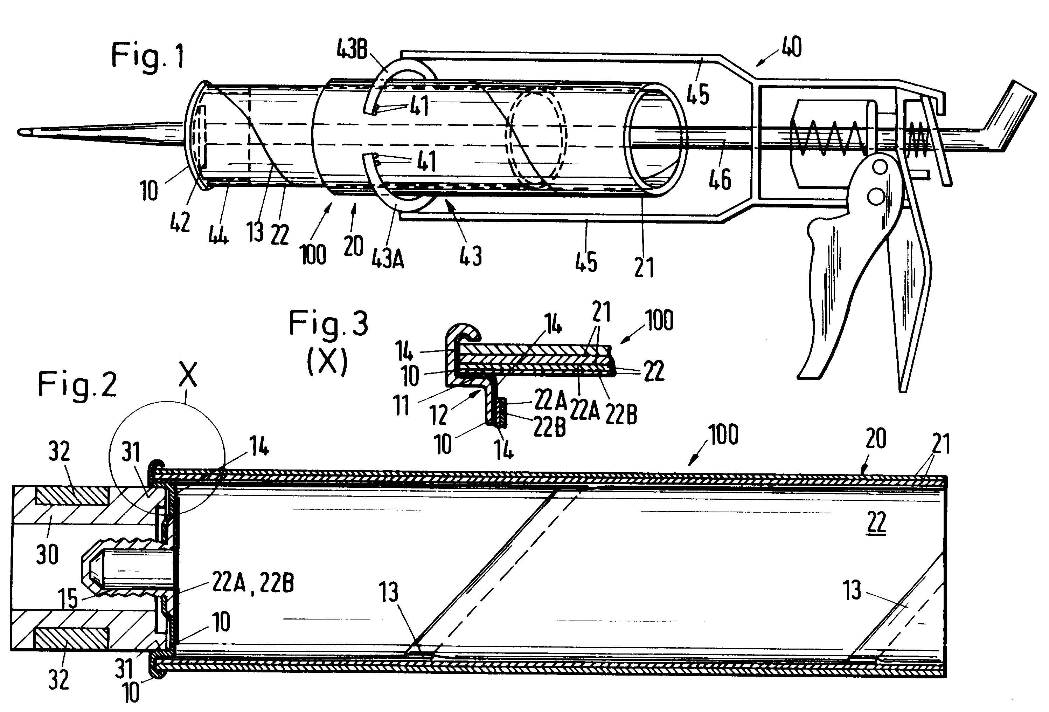

Die Tragschicht ist nun als eine eigenständige Außenhülse 21 ausgeführt, während die Schutzschicht als eine eigenständige Innenhülse 22 ausgeführt ist. Dies ist am besten aus Figur 1 ersichtlich, da in der dort dargestellten Situation die beiden zunächst gleichlangen Außen- und Innenhülsen relativ zueinander veschoben sind, was deshalb möglich ist, weil zwischen beiden lediglich eine kraft-, d. h. reibschlüssige Verbindung besteht.

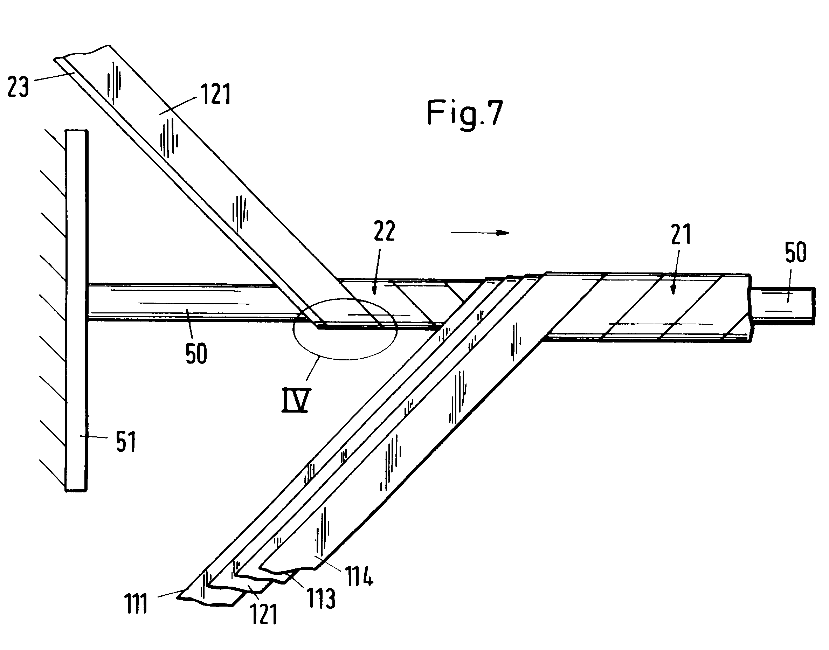

Um einen derartigen aus zwei ineinanderliegenden Hülsen bestehenden Hülsenkörper herzustellen, wird zunächst die folienartige Schutzschicht um einen an sich bekannten Formkörper 50 gewickelt (Fig. 7), bei dem es sich für den Fall des dargestellten und insofern bevorzugten Ausführungsbeispieles um einen einseitig gelagerten Dorn handelt, um den ein zur Dornachse schräg angesetzter Streifen 121 einer Bahnenware aus kunststoffbeschichteter Aluminiumfolie fortlaufend gewickelt wird.

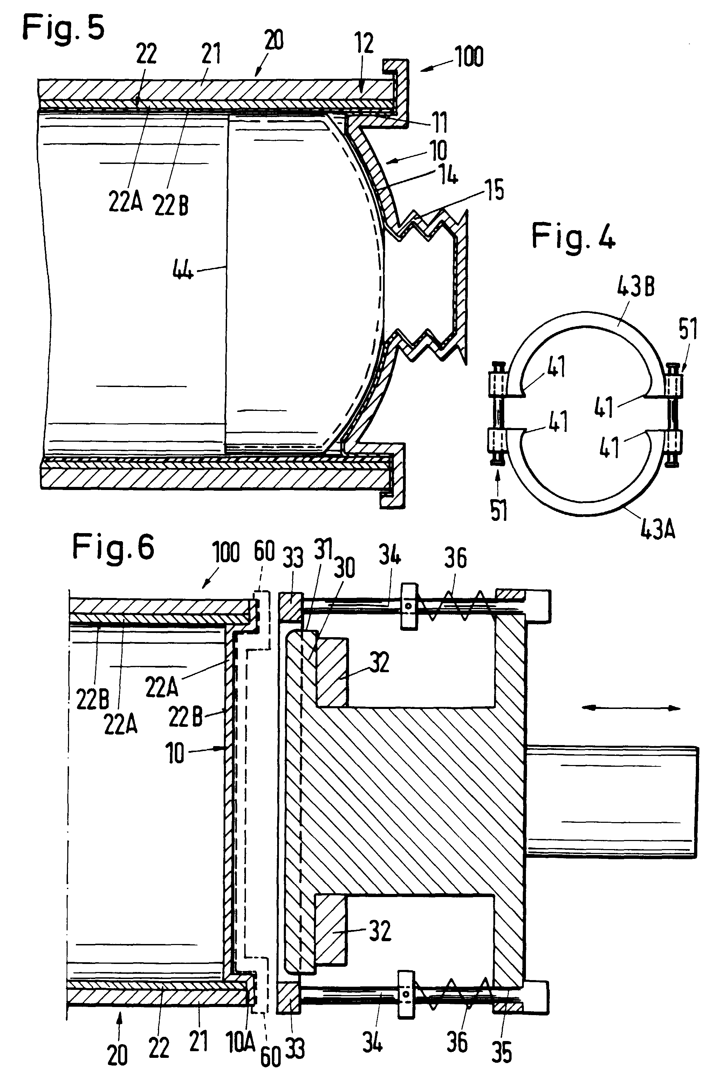

Die Fig. 7 zeigt einen feststehenden Dorn 50, der an einem Dornträger 51 einer im übrigen nicht dargestellten, bekannten Spiralhülsenwickelmaschine angeordnet ist. Diesem Dorn 50 wird der zur Bildung der Innenhülse 22 bestimmte Streifen 21 aus Aluminiumfolie unter einem Winkel von 45° zugeführt. Durch einen ebenfalls nicht dargestellten Riemen wird dieser Streifen 21 wendelförmig auf den Dorn 50 aufgewickelt, so daß eine Art Rohr entsteht, das sich in Richtung des in Fig. 3 eingezeichneten Pfeiles bewegt. Diese Wickeltechnik zur Herstellung von Rohren ist seit vielen Jahrzehnten bekannt.

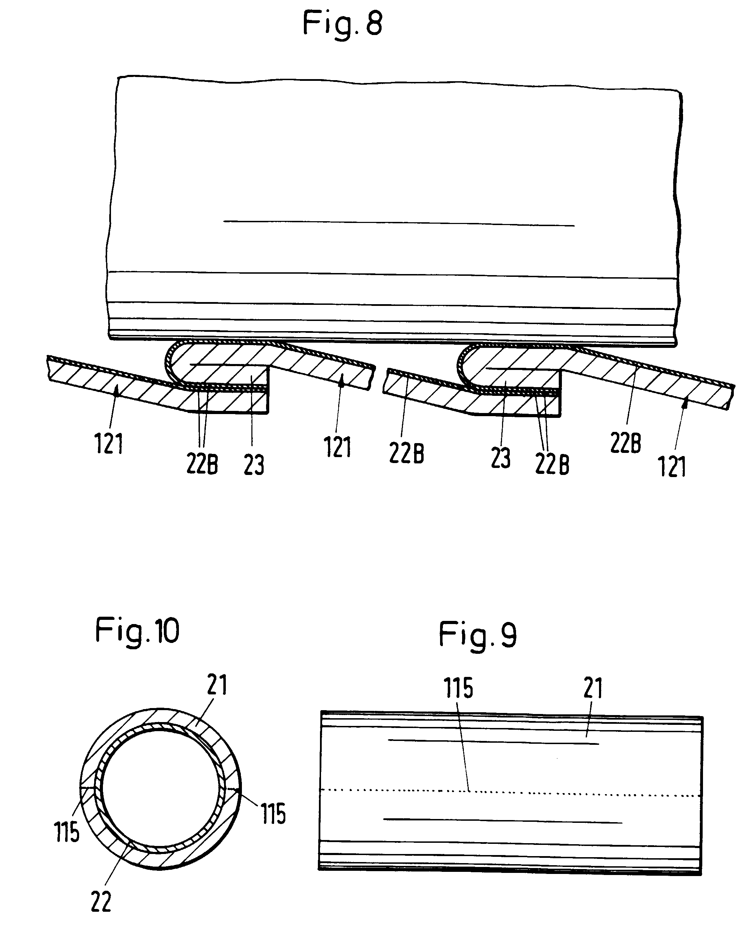

Um aus dem wendelförmig gewickelten, sich überlappenden Streifen 121 eine eigenständige Innenhülse 22 zu bilden, die außerdem gas- und/oder flüssigkeitsdicht ist, wurde der Streifen 121 auf seiner dem Dorn 50 zugewandten Innenseite mit einer Beschichtung 22B versehen. Bei dieser Beschichtung 22B handelt es sich vorzugsweise um einen heißsiegelfähigen Kunststoff, der zwar mit sich selbst bzw. einem entsprechenden Kunststoff verbindbar ist, nicht jedoch mit unbeschichtetem anderem Material. Damit die aus dem wendelförmig gewickelten Streifen 121 entstehende Innenhülse 22 gas- bzw. flüssigkeitsdicht wird, wird gemäß den Figuren 7 und 8 der hintere Rand 23 des die Innenhülse 22 bildenden Streifens 121 vor dem Wickelvorgang um 180° nach vorn gefaltet, so daß sich die in Fig. 8 gezeigte Situation ergibt. Die Darstellung läßt erkennen, daß auf diese Weise die Beschichtung 22B des nach vorn umgelegten hinteren Randes 23 nach außen weist, so daß sie mit der Beschichtung 22B am vorderen Rand der nachfolgenden Windung des Streifens 121 in Berührung kommt. Im Überlappungsbereich liegt demgemäß die Beschichtung 22B des umgefalteten hinteren Randes 23 unter der Beschichtung 22B des vorderen Randes, so daß der wendelförmig gewickelte Streifen 121 insgesamt durch Heißsiegeln zur Innenhülse 20 verbunden werden kann. Es entsteht somit eine eigenständige, gas- und/oder flüssigkeitsdichte Innenhülse 22, und zwar auch dann, wenn der Streifen 121 aus einer Aluminiumfolie und einer zugehörigen Trägerschicht aus Papier besteht.

Auf dieser Innenhülse 22 wird anschließend sofort die Außenhülse 21 erzeugt. Zu diesem Zweck wird dem Dorn 50 das zur Bildung der Außenhülse 10 bestimmte Material zugeführt, beim Ausführungsbeispiel die vier Papierstreifen 111, 112, 113 und 114. Diese werden vor dem Zuführen auf den Dorn 50 mit Leim versehen, so daß die sich selbst und einander überlappenden Papierstreifen 111, 112, 113, 114 insgesamt zu einer eigenständigen Außenhülse 10 verleimt werden. Das Aufbringen dieser Außenhülse 10 auf der zuvor hergestellten Innenhülse 20 erfolgt ohne Zugabe von Leim oder sonstigem Bindemittel und ohne Zugabe irgendwelcher zusätzlicher Klebestreifen, so daß die Außenhülse 21 ausschließlich kraftschlüssig auf die Innenhülse 22 aufgewickelt wird. Das enge Aneinanderliegen von eigenständiger Außenhülse 21 und eigenständiger Innenhülse 22 reicht aus, diese beiden Teile des auf dem Dorn 50 gewickelten Rohres relativ zueinander festzulegen, zumal die Überlappungsbereiche eine gewisse Erhöhung der in der Trennfläche herrschenden Reibung bewirken.

Das fortlaufend auf dem Dorn 50 entstehende Rohr wird in einzelne Abschnitte aufgetrennt, die wiederum in Einzelabschnitte aufgetrennt werden können, die der Länge des jeweils gewünschten Verpackungsbehälters entsprechen. Selbstverständlich ist es möglich, einen derartigen Behälter auf der Außenseite mit einem Etikett zu versehen.

Anstelle des Schrägwickelverfahrens kann für eine, vorzugshalber beide, der Teilhülsen (Innen- und Außenhülse) auch das Parallelwickelverfahren angewendet werden.

Grundsätzlich kann aus der Kartonagenware in entsprechender Weise wie aus der Aluminiumfolie die eigenständige Außenhülse derart schräg gewickelt werden, daß einander überlappende Berührungskanten wieder miteinander verleimt sind. Bevorzugt überlappen die Kartonagen- bzw. Papierbahnen aber einander nicht, sondern stoßen mit ihren Kanten aneinander und werden weitere Kartons bzw. Papierbahnen um die erste Karton- bzw. Papierbahn gewickelt, wobei durch versetzte Anordnung der Berührungskanten und vollflächige Beleimung zwischen den benachbarten Kartonbahnen eine eigenständige Außenhülse entsteht.

Während nun bei der bekannten Herstellung von Hülsen aus Mehrschichtmaterial die folienartige Schutzschicht auf ihrer dem Kartonagenmaterial zugewandten Seite, insbesondere mit Papier, beschichtet und durch vollflächiges Leimen mit dem Kartonagenmaterial fest verbunden wird, entfällt bei dem erfindungsgemäßen Verfahren dieser Beleimungsvorgang und kann darüberhinaus auf die Papierbeschichtung der Aluminium- oder Kunststoffolie verzichtet werden, so daß beim späteren Recyclen der Innenhülse reines oder allenfalls kunststoffbeschichtetes, nicht aber papierbeschichtetes Aluminium anfällt. Es hat sich gezeigt, daß die Formspannungen der Innenhülse 22 und der Außenhülse 21 nach dem Verlassen des Wickeldornes ausreicht, die einmal entstadene Form beizubehalten. Der so hergestellte Hülsenkörper kann in Abschnitte aufgetrennt und in üblicher Weise weiter bearbeitet und verwendet werden, weil die Haftreibung zwischen den beiden eigenständigen Hülsen hierzu ausreicht.

Wie aus Figur 3 ersichtlich, ist in dem dort dargestellten Ausführungsbeispiel die Außenhülse 21 aus zwei Lagen von miteinander verleimter Kartonagenbahnen hergestellt, während die Innenhülse 22 aus einer Aluminiumschicht 22A und einer zum Hülseninneren weisenden Kunststoffschicht 22B besteht.

Der Mündungsverschluß 10 ist als Tiefziehteil aus Metallblech hergestellt und paßt mit einer nach radial außen weisenden Wandungsfläche 11 mit leichtem Übermaß stopfenartig in die Innenhülse 22 hinein. Dieses Tiefziehteil ist auf seiner dem Behälterinneren zugewandten Seite mit einer wärmeverschweißbaren Kunststoffschicht 14 versehen, welche im Bereich der zylindrischen Wandlungsfläche 11 zwangsläufig an der Kunststoffschicht 22B der Innenhülse 22 flächig anliegt (Fig. 3). Mittels eines von außen auf den auf den Hülsenkörper 20 aufgeschobenen Mündungsverschluß 10 aufsetzbaren Metallkörper 30 mit einer ihn umgebenden Heizung 32 kann eine Wärmeverschweißung der Kunststoffschicht 14 mit der Kunststoffschicht 22 A vorgenommen werden. Hierzu weist der Metallkörper eine ringförmige Außenkontur 31 auf, die zwecks bestmöglicher Wärmeübertragung so genau wie möglich an den Verbindungsrand 12 des Mündungsverschlusses 10 formangepaßt ist.

Der Mündungsverschluß 10 kann zwar randseitig umgebördelt sein, ist aber - im Gegensatz zu der bekannten Befestigungsmethode von Mündungsverschlüssen, bei denen der Mündungsverschluß ausschließlich dadurch gehalten wird, daß er sich im Bereich einer Bördelkante in die Außenfläche der Hülse fest einkrallt - mit der Außenhülse 22 nicht fest verbunden (Fig. 3).

Ein erfindungsgemäßer Verpackungsbehälter kann nun in üblicher Weise genutzt werden. Im Falle des dargestellten Ausführungsbeispiels also zum Beispiel mittels einer Kartuschenpistole 40 nach und nach entleert werden. Zu diesem Zweck weist die Kartuschenpistole an ihrem vorderen Ende einen Ringkörper 43 auf, gegen den sich der Mündungsverschluß 10 der Kartusche randseitig abstützt, während der Kolben 42 in der Kartusche vorgetrieben wird und ein hohlkolbenförmiges Dichtungselement 44 in Richtung auf den Mündungsverschluß 10 vortreibt und dabei den Kartuscheninhalt über einen Mündungsstutzen 15 aus der Kartusche austreibt. Um eine möglichst vollständige Entleerung der Kartusche zu gewährleisten, sind der Mündungsverschluß 10 und das Dichtungselement 44 gemäß Fig. 5 vorzugsweise an ihren aufeinander zu weisenden Flächen identisch, vorzugsweise nach außen bombiert, geformt (männlich/weiblich).

Um nun die erfindungsgemäßen Verpackungsbehälter nach ihrem Entleeren recyclen zu können, wird gemäß dem in Fig. 1 und 4 dargestellten und insofern bevorzugten Ausführungsbeispiel eine neuartige, im Bereich des Ringkörpers 43 geänderte Kartuschenpistole 40 verwendet, bei der Ringkörper 43 in zwei Ringkörperhälften 43A und 43B unterteilt ist. Diese beiden Ringkörperhälften werden beim normalen Gebrauch zum Entleeren der Kartusche durch ein einfaches (nicht dargestelltes) Sicherungselement zusammengehalten; entfernt man dieses Sicherungselement, können die Ringkörperhälften mittels ihrer federnden Haltebügel 45 soweit voneinander beabstandet werden, daß der Mündungsverschluß 10 des Verpackungsbehälters 100 durch sie hindurch paßt. Nach leichtem Vorschieben des Hülsenkörpers 20 werden die an ihrer nach radial innen weisenden Seite mit Greifelementen 41 ausgestatteten Ringkörperhälften 43A und 43B, zum Beispiel mit einer Hand leicht zusammengepreßt, so daß sich die Greifelemente 41 in die Außenhülse 21 eingraben. Preßt man nun den Kolben 42 weiter vor, so wird - wie dargestellt - die gesamte Innenhülse 22 samt des als Handhabe dienenden Mündungsverschlusses 10 und des Dichtungselementes 44 bezüglich der Außenhülse 21 vorgeschoben. Zu diesem Zweck weist die Kolbenstange 46 der Kartuschenpistole 40 vorzugsweise eine etwas größere Länge als üblich auf. Mit diesem Verschiebevorgang kann in der in Figur 1 dargestellten Relativlage zwischen Innenhülse und Außenhülse bereits aufgehört werden, weil sich die beiden Hülsen dann von Hand durch weiteres Auseinanderziehen problemlos voneinander trennen lassen. Führungselemente 51 (Fig. 4) erleichtern das Handhaben der Ringkörperhälften.

Gewünschtenfalls ist es danach möglich, den Mündungsverschluß 10 von der Innenhülse 22 abzureißen und auch das zumeist aus Kunststoff bestehende Dichtungselement 44 aus der Innenhülse 21 herauszuschieben, so daß der Verpackungsbehälter, in seine Bestandteile völlig zerlegt problemlos den bekannten Wiederverwendungsprozessen für die einzelnen Materialien zugeführt werden kann. - Bevorzugt bestehen aber sowohl der Mündungsverschluß 10 als auch der an ihm vorgesehene Mündungsstutzen 15 sowie das Dichtungselement 44 aus ein und demselben Material, das vorzugsweise mit dem Material der Innenhülse 22 identisch ist (Fig. 5). Auf diese Weise werden - bis auf gegebenenfalls vorhandene, verschwindend geringe Mengen an wärmeverschweißbarem Kunststoff lediglich zwei Materialien für den Verpackungsbehälter verwendet und getrennt recyclebar.

Während sich die vorangehenden Ausführungsbeispiele vor allem auf sogenannte Kartuschen bezogen, können auch andere Mehrschicht-Verpackungsbehälter der gattungsgemäßen Art erfindungsgemäß aufgebaut sein und erfindungsgemäß hergestellt werden, insbesondere auch solche, die zum Aufbewahren von Flüssigkeiten sowie zum Aufbewahren von Lebensmitteln dienen. In Fig. 6 ist für einen derartigen Anwendungsfall in nicht maßstabsgerechter Darstellung gezeigt, daß als Mündungsverschluß 10 auch ein folienartiges Material in Betracht kommt, insbesondere ein Folienmaterial, das mit dem der Innenhülse 22 aus dem gleichen Werkstoff, vorzugsweise aus Aluminium besteht, wobei - wiederum bevorzugt - sowohl der Mündungsverschluß als auch die Innenhülse auf ihren dem Behälterinneren zugewandten Seiten mit einem wärmeverschweißbaren Kunststoff beschichtet oder beide aus einem derartigen Werkstoff aufgebaut sind. Bei dem Ausführungsbeispiel nach Fig. 6 bestehen die Innenhülse 22 und der Mündungsverschluß 10 jeweils aus einer Aluminiumfolienschicht 22A und einer Kunststoffoberflächenbeschichtung 22B, vorzugsweise aus Polyethylen. Zur Herstellung einer dichten Verbindung zwischen diesem Mündungsverschluß und dem Hülsenkörper 20 dient wiederum ein kreisförmiger Metallkörper 30, dessen radial außen liegende Ringkontur 31 in das Mündungsende des Hülsenkörpers 20 mehr oder minder stramm hineinpaßt und der mit einer Heizung 32 in dem für das Wärmeverschweissen der Kunststoffoberflächenbeschichtung 22B erforderlichen Maße beheizbar. Um der als Mündungsverschluß 10 verwendeten Folie bei dem Verschweißvorgang den erforderlichen Halt und Sitz in der richtigen Position zu verleihen, ist der Mündungsverschluß 10 mit ausreichendem Übermaß versehen, so daß sich ein die Stirnfläche des Hülsenkörpers 20 abdeckender Flansch 10A ausbilden kann, der von einem federnd andrückbaren Ring 33 in Position gehalten wird, bevor der Metallkörper 30 in das freie Hülsenende eingeschoben wird. Zu diesem Zweck ist der Ring 33 mittels Führungsstangen 34 in Führungsbohrungen 35 des Metallkörpers 30 gegen den Druck von Federn 36 verschiebbar gelagert und derart angeordnet, daß zuerst der Ring 33 am Flansch 10A zur haltenden/pressenden Anlage am Stirnende des Hülsenkörpers 20 gelangt, ehe die Ringkontur 31 des Metallkörpers 30 sich in das Hülsenende hineinschiebt. - Falls in besonderen Anwendungsfällen ein derartiger Folien-Mündungsverschluß für den Transportfall zu empfindlich ist, kann eine an sich bekannte, in Fig. 6 gestrichelt dargestellte Schutzkappe 60, aus Kunststoff, Metall oder dergleichen als weiteres, mechanisch wirkendes Schutzmittel auf das fertig verschlossene Hülsenende reibschlüssig aufgeschoben werden.

Es versteht sich, daß die folienartige Innenhülse auch aus anderen Werkstoffen als Aluminium, wie Pergament, Papier oder anderen folienartigen Werkstoffen hergestellt werden kann.

Um die aus den vier Papierstreifen 111, 112, 113 und 114 (Fig. 7) bestehende Außenhülse 21 getrennt von der gegebenenfalls kontaminierten Innenhülse 22 entsorgen zu können, ist es nach Entleeren des Verpackungsbehälters lediglich erforderlich, die auf ihrer Außenseite nicht mit der Innenseite der Außenhülse 21 auf irgendeine Weise verklebte oder verschweißte Innenhülse 22 in axialer Richtung aus der Außenhülse 21 herauszuziehen, und zwar mit Hilfe des Mündungsverschlusses 10, der ausschließlich mit der Innenhülse 22 verbunden ist. Dieses axiale Herausziehen der hierbei ihre Rohrform beibehaltenden Innenhülse 22 wird erleichtert, wenn zuvor die Außenhülse 21 von Hand geringfügig zusammengepreßt worden ist, um eine örtliche Trennung zwischen Innenhülse 22 und Außenhülse 21 zu bewirken. Diese Trennung ergibt sich aufgrund der Tatsache, daß die bei einem derartigen Walkvorgang verformte Innenhülse aufgrund der Verwendung der Aluminiumfolie ihre verformte Form beibehält, wogegen die dickere, aus Papier bestehende Außenhülse 21 in ihre Ausgangslage zurückkehrt. Mit Hilfe des Verschlusses kann somit die Innenhülse 22 sehr leicht aus der Außenhülse 10 in axialer Richtung herausgezogen werden.

Die voneinander getrennten Hülsen 21 und 22 können anschließend getrennt einer Wiederverwertung oder Entsorgung zugeführt werden. Sollte eine Wiederverwertung der Innenhülse 20, insbesondere wegen deren Kontaminierung nicht möglich sein, kann sie auf einen Bruchteil ihres ursprünglichen Volumens komprimiert werden, so daß sich das einer Sondermülldeponie zuzuführende Volumen erheblich reduzieren läßt.

Die Fig. 9 und 10 zeigen schließlich eine weitere Ausgestaltungsmöglichkeit des Verpackungsbehälters. In diesem Fall ist die Außenhülse 21 mit mindestens einer axial verlaufenden Perforation 115 versehen, die es nach dem Entleeren des Verpackungsbehälters gestattet, die eigenständige Außenhülse 21 aufzubrechen und die Innenhülse 22 unzerstört zu entnehmen. Eine derartige Perforation 115 kann ohne weiteres vor dem Etikettieren des Verpackungsbehälters eingebracht werden.

## Patentansprüche

1. Hülsenförmiger Einweg-Verpackungsbehälter aus Mehrschichtmaterial
- mit mindestens einem Mündungsverschluß und
- mit einem eigensteifen, entlang seiner gesamten Länge gleichmäßig aus mindestens einer innenliegenden folienartigen Schutzschicht und einer bezüglich der Schutzschicht außenliegenden Tragschicht aufgebauten Hülsenkörper,
bei dem
- die Tragschicht als eigenständige Außenhülse (21) und
- die Schutzschicht als eigenständige Innenhülse (22) ausgebildet ist, und bei dem
- die Außenhülse (21) die Innenhülse (22) derart lediglich kraftschlüssig umschließt, daß bei einem Zusammendrücken der Außenhülse die Innenhülse sich örtlich von der Außenhülse trennt.

2. Verpackungsbehälter nach Anspruch 1, dadurch gekennzeichnet, daß die Innenhülse mit einer Handhabe zum Ausüben einer Zug- oder Druckkraft auf die Innenhülse (22) in Bezug auf die Außenhülse (21) festverbunden oder einteilig mit dieser ausgebildet ist.

3. Verpackungsbehälter nach Anspruch 1 oder 2, dadurch gekennzeichnet, daß der mindestens eine Mündungsverschluß (10) als die Handhabe vorgesehen und alleine mit der Innenhülse (22) unlösbar verbunden ist.

4. Verpackungsbehälter nach Anspruch 3, dadurch gekennzeichnet, daß der Mündungsverschluß (10) eine stopfenartig in die Innenhülse (22) hineinpassende, nach radial außen weisende Wandungsfläche (11) aufweist.

5. Verpackungsbehälter nach Anspruch 3 oder 4, dadurch gekennzeichnet, daß der Mündungsverschluß (10) als Tiefziehteil ausgestaltet ist.

6. Verpackungsbehälter nach einem der Ansprüche 3 bis 5, dadurch gekennzeichnet, daß der Mündungsverschluß (10) sowie die Innenhülse (22) auf ihren dem Behälterinneren zugewandten Seite mit einem wärmeverschweißbaren Kunststoff beschichtet oder daraus gebildet sind.

7. Verpackungsbehälter nach einem der Ansprüche 4 bis 6, dadurch gekennzeichnet, daß der topfartige Teil (Wandungsfläche 11) ein gewisses Übermaß bezüglich des lichten Maßes der Innenhülse (22) aufweist.

8. Verpackungsbehälter nach einem der Ansprüche 1 bis 3, dadurch gekennzeichnet, daß der Mündungsverschluß (10) aus einem folienartigen Material besteht.

9. Verpackungsbehälter nach einem der Ansprüche 1 bis 8, dadurch gekennzeichnet, daß die Außenhülse (21) mit mindestens einer axial verlaufenden Perforation (115) versehen ist.

10. Verpackungsbehälter nach einem der Ansprüche 1 bis 9, dadurch gekennzeichnet, daß die Innenhülse eine Aluminiumfolie aufweist und die Mündungsverschlüsse aus tiefgezogenem Aluminium-Material bestehen.

11. Verpackungsbehälter nach einem der Ansprüche 1 bis 10, mit einem eine Entleerungsöffnung aufweisenden Mündungsverschluß (10) und einem kolbenförmigen Dichtungselement (44) zum Leerpressen des Verpackungsbehälters, dadurch gekennzeichnet, daß der Mündungsverschluß (10) auf seiner Innenseite und das Dichtungselement (44) auf seiner Stirnaußenseite identisch männlich/weiblich nach außen zur Entleerungsöffnung hin geneigt geformt sind.

12. Verfahren zum Herstellen eines hülsenförmigen Einweg-Verpackungsbehälters bei dem eine folienartige Schutzschicht zunächst unter Herstellen einer eigenständigen Innenhülse unter Verbinden überlappender Flächen straff um einen die Hülseninnenkontur definierenden Formkörper herum gewickelt wird und nachfolgend aus einer Tragschichtmaterial eine eigenständige, radial verformbar die Innenhülse unter Kraftschluß straff umschließende eigenständige, gewickelte Außenhülse unter Verbinden des Tragschichtmaterials lediglich im Berührungsbereich übereinanderliegender Flächen des Tragschichtmaterials, d. h. in sich verklebt um die Innenhülse herum gewikkelt und der eine Einheit bildende Hülsenkörper und der Formkörper erst danach voneinander getrennt werden, so daß bei einem Zusammenpressen der Außenhülse die Innenhülse sich örtlich von der Außenhülse trennt.

13. Verfahren nach Anspruch 12, dadurch gekennzeichnet, daß der Hülsenkörper ausschließlich an der Innenhülse mit mindestens einem Mündungsverschluß unlösbar dichtend verbunden, insbesondere wärmeverschweißt wird.

14. Verfahren nach Anspruch 12 oder 13, dadurch gekennzeichnet, daß der hintere Rand (23) eines die Innenhülse (22) bildenden, auf der Innenseite mit einer Beschichtung (22B) versehenen Streifens (121) vor dem Wickelvorgang um 180° nach vorn gefaltet und mittels der auf diese Weise nach außen weisenden Beschichtung (22B) mit dem vorderen Rand der nachfolgenden Windung des Streifens (121) über dessen Beschichtung (22B) verbunden wird und daß auf die derart hergestellte Innenhülse (22) mindestens ein Streifen (111, 112, 113, 114) zur Bildung der Außenhülse (21) ausschließlich kraftschlüssig wendelförmig aufgewickelt wird, wobei dieser Streifen (111, 112, 113, 114) ausschließlich mit sich selbst in seinem Überlappungsbereich bzw. bei Verwendung mehrerer Streifen zur Bildung der Außenhülse (21) mit diesen Streifen (111, 112, 113, 114) durch vor dem Wickelvorgang aufgetragenes Verbindungsmaterial verbunden wird.

15. Verfahren nach einem der Ansprüche 12 bis 14, dadurch gekennzeichnet, daß die Außenhülse (21) mit mindestens einer axial verlaufenden Perforation (115) versehen wird.

16. Verfahren nach einem der Ansprüche 12 bis 15, dadurch gekennzeichnet, daß eine Beschichtung (22B) eines die Innenhülse (22) bildenden Streifens (121) durch einen heißsiegelfähigen Kunststoff gebildet wird.

17. Verfahren nach einem der Ansprüche 12 bis 16, dadurch gekennzeichnet, daß das Material zur Verbindung des oder der die Außenhülse (21) bildenden Streifen(s) (111, 112, 113, 114) durch einen Klebstoff gebildet wird.

18. Vorrichtung zum Herstellen eines hülsenförmigen Verpackungsbehälters nach einem der Ansprüche 1 bis 11 gemäß dem Verfahren nach einem der Ansprüche 12 bis 17, dadurch gekennzeichnet, daß für mehrere Lagen des Tragschichtmaterials Beleimungsrollen derart angeordnet sind, daß die Innenseite der innersten Lage und die Außenseite der äußersten Lage der Traghülse unbeleimt bleiben.

19. Vorrichtung zum Herstellen eines hülsenförmigen Verpackungsbehälters nach einem der Ansprüche 3 bis 7, gekennzeichnet durch einen eine ringförmige, beheizbare Außenkontur aufweisenden Metallkörper (30), bei dem die Außenkontur (31) dem Verbindungsrand (12) des Mündungsverschlusses (10) formangepaßt ist.

## Claims

1. A sleeve-shaped disposable packing container of multi-layer material
- having at least one opening closure and
- having an inherently-rigid sleeve body assembled uniformly along its entire length of at least one internal sheet-like protective layer and a support layer which is external in relation to the protective layer,
in which
- the support layer is in the form of an independent outer sleeve (21) and
- the protective layer is in the form of an independent inner sleeve (22), and in which
- the outer sleeve (21) encircles the inner sleeve (22) merely in a friction-fitting manner such that when the outer sleeve is squeezed, the inner sleeve separates locally from the outer sleeve.

2. A packing container in accordance with Claim 1, characterised in that the inner sleeve is firmly connected to a handle for exerting pull or compressive force on the inner sleeve (22) in relation to the outer sleeve (21), or is formed in one piece with this handle.

3. A packing container in accordance with Claim 1 or 2, characterised in that the at least one opening closure (10) is provided as the handle and is undetachably connected to the inner sleeve (22) only.

4. A packing container in accordance with Claim 3, characterised in that the opening closure (10) has a wall area (11) which fits into the inner sleeve (22) in the manner of a plug and is directed radially outwards.

5. A packing container in accordance with Claim 3 or 4, characterised in that the opening closure (10) is in the form of a deep-drawing part.

6. A packing container in accordance with any one of Claims 3 to 5, characterised in that the side of the opening closure (10) and the inner sleeve (22) facing the interior of the container is coated with a heat weldable plastics material or is formed therefrom.

7. A packing container in accordance with any one of Claims 4 to 6, characterised in that the cup-like part (wall area 11) is oversized to a certain extent relative to the internal measurement of the inner sleeve (22).

8. A packing container in accordance with any one of Claims 1 to 3, characterised in that the opening closure (10) is composed of a sheet-like material.

9. A packing container in accordance with any one of Claims 1 to 8, characterised in that the outer sleeve (21) is provided with at least one axially extending perforation (115).

10. A packing container in accordance with any one of Claims 1 to 9, characterised in that the inner sleeve has an aluminium sheet and the opening closures are composed of aluminium material, in particular deep-drawn aluminium material.

11. A packing container in accordance with any one of Claims 1 to 10, having an opening closure (10) with a discharge opening and having a piston-shaped sealing member (44) to empty the packing container by pressing, characterised in that the inner surface of the opening closure (10) and the frontal outer surface of the sealing member (44) are, in male/female form, identically formed to incline outwards towards the discharge opening.

12. A method of manufacturing a sleeve-shaped disposable packing container, in which first of all a sheet-like protective layer is ― with manufacture of an independent inner sleeve with the connection of overlapping surfaces ― wound tightly around a shaped body defining the sleeve inner contour, and subsequently an independent¹ wound outer sleeve which is formed from a support-layer material and tightly encircles the inner sleeve in a friction-fitting and radially deformable manner is wound around the inner sleeve with the support-layer material merely being connected in the contact region between surfaces, lying on top of one another, of the support-layer material, i.e. being stuck to itself, and only after that are the sleeve body forming a unit and the shaped body separated from one another, so that the inner sleeve separates locally from the outer sleeve upon squeezing of the latter.

13. A method in accordance with Claim 12, characterised in that solely at the inner sleeve, the sleeve body is undetachably sealingly connected to at least one opening closure, in particular heat welded.

14. A method in accordance with Claim 12 or 13, characterised in that the rear edge (23) of a strip (121) which forms the inner sleeve (22) and whose inner surface is provided with a coating (22B) is folded forwards through 180 before the winding procedure and is, by means of the coating (22B) directed outwards in this manner, connected to the front edge of the subsequent winding of the strip (121) via the coating (22B) thereof, and in that at least one strip (111, 112, 113, 114) for forming the outer sleeve (21) is helically wound solely in a friction-fitting manner onto the inner sleeve (22) manufactured in this manner, this strip (111, 112, 113, 114) being connected solely with itself in its overlapping region or when a plurality of strips are used to form the outer sleeve (21) being connected to these strips (111, 112, 113, 114) by connecting material applied before the winding procedure.

15. A method in accordance with any one of Claims 12 to 14, characterised in that the outer sleeve (21) is provided with at least one axially extending perforation (115).

16. A method in accordance with any one of Claims 12 to 15, characterised in that a coating (22B) of a strip (121) forming the inner sleeve (22) is formed by a heat-sealing plastics material.

17. A method in accordance with any one of Claims 12 to 16, characterised in that the material for connecting the strip or strips (111, 112, 113, 114) forming the outer sleeve (21) is formed by an adhesive.

18. An apparatus for manufacturing a sleeve-shaped packing container in accordance with any one of Claims 1 to 11 according to the method in accordance with any one of Claims 12 to 17, characterised in that for a plurality of layers of the support-layer material, gluing rollers are arranged in such a manner that the inner surface of the innermost layer and the outer surface of the outermost layer of the carrying sleeve remain without glue.

19. An apparatus for manufacturing a sleeve-shaped packing container in accordance with any one of Claims 3 to 7, characterised by a metal body (30) having an annular heatable outer contour, the outer contour (31) being matched in shape to the connecting edge (12) of the opening closure (10).

## Revendications

1. Récipient d'emballage à usage unique en forme de douille en matériau multicouche
- avec au moins une fermeture à l'embouchure et
- un corps de douille à rigidité propre, constitué sur toute sa longueur uniformément à partir d'au moins une couche de protection en forme de feuille située à l'intérieur et une couche de support extérieure relativement à la couche de protection, où
- la couche de support est réalisée comme douille extérieure propre (21) et la couche de protection comme douille intérieure propre (22) et où
- la douille extérieure (21) entoure la douille intérieure (22) de telle sorte uniquement par force que lors d'une compression de la douille extérieure, la douille intérieure se sépare spatialement de la douille extérieure.

2. Récipient d'emballage selon la revendication 1, caractérisé en ce que la douille intérieure est reliée solidement à une prise pour exercer une force de traction ou de pression sur la douille intérieure (22) relativement à la douille extérieure (21) ou qu'elle est réalisée en une pièce avec celle-ci.

3. Récipient d'emballage selon la revendication 1 ou 2, caractérisé en ce qu'au moins une fermeture d'embouchure précitée (10) est prévue comme prise et est reliée inamoviblement uniquement à la douille intérieure (22).

4. Récipient d'emballage selon la revendication 3, caractérisée en ce que la fermeture d'embouchure (10) présente une surface de paroi (11) s'adaptant à la manière d'un bouchon dans la douille intérieure (22), orientée radialement vers l'extérieur.

5. Récipient d'emballage selon la revendication 3 ou 4, caractérisé en ce que la fermeture d'embouchure (10) est réalisée comme pièce emboutie profond.

6. Récipient d'emballage selon l'une des revendications 3 à 5, caractérisé en ce que la fermeture d'embouchure (10) ainsi que la douille intérieure (22) sont revêtues sur leur coté orienté vers l'intérieur du récipient d'une matière synthétique thermosoudable ou sont réalisées à partir de celle-ci.

7. Récipient d'emballage selon l'une des revendications 4 à 6, caractérisé en ce que la partie en forme de pot (surface de paroi 11) présente une certaine surmesure relativement à la mesure intérieure de la douille intérieure (22).

8. Récipient d'emballage selon l'une des revendications 1 à 3, caractérisé en ce que la fermeture d'embouchure (10) est réalisée en un matériau de feuille.

9. Récipient d'emballage selon l'une des revendications 1 à 8, caractérisé en ce que la douille extérieure (21) est pourvue d'au moins une perforation (115) s'étendant axialement.

10. Récipient d'emballage selon l'une des revendications 1 à 9, caractérisé en ce que la douille intérieure présente une feuille en aluminium et que les fermetures d'embouchure sont réalisées en un matériau d'aluminium notamment embouti profond.

11. Récipient d'emballage selon l'une des revendications 1 à 10, avec une fermeture d'embouchure (10) présentant une ouverture de vidange et un élément d'étanchéité (44) en forme de piston pour vider le récipient d'emballage, caractérisé en ce que la fermeture d'embouchure (10) sur son côté intérieur, et l'élément d'étanchéité (44) sur son côté extérieur frontal, sont formés de manière identique en une configuration mâle/femelle en étant inclinés vers l'extérieur vers l'ouverture de vidange.

12. Procédé de fabrication d'un récipient d'emballage à usage unique en forme de douille où une couche de protection en feuille, tout d'abord en réalisant une douille intérieure propre, en reliant des surfaces qui se chevauchent, est enroulée d'une manière serrée autour d'un corps de moule définissant le contour intérieur de douille et où ensuite, à partir d'un matériau de couche de support, une douille extérieure enroulée propre, déformable radialement, enserrant la douille intérieure par une liaison par force, en reliant le matériau de la couche de support, est enroulée uniquement dans la zone de contact de surfaces superposées du matériau de couche de support, c'est-à-dire en étant collée autour de la douille intérieure et le corps de douille formant une unité et le corps de moule étant ensuite seulement séparés l'un de l'autre de telle sorte que lors d'une compression de la douille extérieure, la douille intérieure se sépare spatialement de la douille extérieure.

13. Procédé selon la revendication 12, caractérisé en ce que le corps de douille est relié d'une manière étanche et inamovible exclusivement à la douille intérieure à au moins une fermeture d'embouchure, notamment par thermosoudage.

14. Procédé selon la revendication 12 ou 13, caractérise en ce que le bord arrière (23) d'une bande (121) formant la douille intérieure (22), pourvue sur le côté intérieur d'un revêtement (22B) est plié vers l'avant avant l'opération d'enroulement sur 180° et est relié au moyen du revêtement (22B) orienté de cette manière vers l'extérieur au bord avant de l'enroulement suivant de la bande (121) par le revêtement (22B) de celle-ci et en ce qu'il est enroulé hélicoïdalement sur la douille intérieure (22) ainsi réalisée au moins une bande (111, 112, 113, 114) pour former la douille extérieure (21) exclusivement par liaison par force, cette bande (111, 112, 113, 114) étant reliée exclusivement à elle même dans sa zone de recouvrement ou lors de l'utilisation de plusieurs bandes pour former la douille extérieure (21) à ces bandes (111, 112, 113, 114) par un matériau de liaison appliqué avant l'opération d'enroulement.

15. Procédé selon l'une des revendications 12 à 14, caractérisé en ce que la douille extérieure (21) est pourvue d'au moins une perforation (115) s'étendant axialement.

16. Procédé selon l'une des revendications 12 à 15, caractérisé en ce qu'un revêtement (22B) d'une bande (121) formant la douille intérieure (22) est formé par une matière synthétique thermosoudable.

17. Procédé selon l'une des revendications 12 à 16, caractérisé en ce que le matériau pour relier la ou les bandes (111, 112, 113, 114) formant la douille extérieure (21) est formé par une colle.

18. Dispositif de fabrication d'un récipient d'emballage en forme de douille selon l'une des revendications 1 à 11 selon le procédé selon l'une des revendications 12 à 17, caractérisé en ce que pour plusieurs couches du matériau de couche de support, des rouleaux d'encollage sont disposés de façon que le côté intérieur de la couche la plus intérieure et le côté extérieur de la couche la plus extérieure de la douille de support ne soit pas encollés.

19. Dispositif de fabrication d'un récipient d'emballage en forme de douille selon l'une des revendications 3 à 7, caractérisé par un corps métallique annulaire apte à être chauffé (30) présentant un contour extérieur où le contour extérieur (31) est adapté par concordance des formes au bord de liaison (12) de la fermeture d'embouchure (10).
